# EUROPEAN PATENT APPLICATION

(11) **EP 1 939 088 A1**
(43) Date of publication of application: **02.07.2008**
(21) Application number: 05799717.3
(22) Date of filing: 29.09.2005
(51) Int. Cl.: B64D 37/32, B65D 45/02, F16L 25/02

(54) **METHOD OF PROTECTING FUEL TANKS THAT ARE MADE FROM COMPOSITE MATERIALS AGAINST ELECTRIC DISCHARGES**

(71) Applicant: Airbus España, S.L., 28906 Getafe (Madrid) (ES)
(72) Inventor: BERENGUER MONGE, Oscar, E-28027 Madrid (ES); LÓPEZ-REINA TORRIJOS, Jose Ignacio, E-28026 Madrid (ES)
(74) Representative: Elzaburu Marquez, Alberto
(86) International application number: PCT/ES2005/070133
(87) International publication number: WO 2007/039650

(57) **Abstract**

A method of protecting a group of metal devices (13, 15) installed inside a fuel tank (11), manufactured either completely or partially with composites, such as a tank located in an aircraft, against electrical discharges, according to which the following steps are carried out:
a) an insulating member (21) is included at the points where the metal devices (13, 15) are fixed/attached to the fuel tank (11) to assure their electrical insulation with respect to the fuel tank (11);
b) insulating inserts (23) are included in the linear metal devices (13), such as pipes, such that they are subdivided into parts (31, 33, 35) insulated from one another;
c) a connection with a metal sub-structure (25) with a very low resistance is provided in each one of the insulated parts (31, 33, 35).

## Description

### FIELD OF THE INVENTION

The invention refers to a method of protecting against electrical discharges caused by lightning striking fuel tanks manufactured with materials with low electrical conductivity, and particularly to a method for protecting devices such as pipes, valves or pumps inside them.

### BACKGROUND OF THE INVENTION

Composites offer high electrical resistance in comparison with metallic materials. The latter have customarily been used in the aeronautical field for the manufacture of structures intended for fuel storage given their mechanical characteristics due to the weight of these materials.

The inherent high electrical resistance of composites causes a highly relevant induction effect on the internal systems within fuel tank. This effect induces internal electric currents that may generate catastrophic failures or phenomena for overall structural integrity.

The phenomena related with moderate or severe electrical discharges occurring in the case of lightning strikes that must be prevented in a structure manufactured with a material with low electrical conductivity to assure its structural integrity/malfunction of any of the critical electrical equipment/electric arcs inside the tank are:
Hot spots: the high current density in certain specific locations of the structure, such as joints or intersection elements, may generate spots with high temperatures. If this temperature exceeds 200°C (auto-ignition point of the fuel considered by FAA/JAA authorities), the fuel may reach its flash point should the suitable stoichiometric concentrations be present inside the tank.

Electric arcs (sparking): the flow of current through materials with different resistances and in geometrically spaced locations may cause voltage drops amongst one another, releasing discharges in the form of an electric arc and causing the ignition of the fuel/inflammable liquid contained in the structure.

Electrical equipment malfunction: the electrical discharges caused by a lightning strike give way to high levels of current circulating through the outer structure and may therefore introduce electric current through the internal systems either by shunting or induction. These effects are capable of causing critical equipment malfunction, generating a catastrophic failure.

### SUMMARY OF THE INVENTION

The object of the present invention is aimed to protect aircraft fuel tanks located in their wings and/or stabilizers manufactured on composites and provided with different electrical equipment against high electrical discharges, but it is applicable to any structure built from a material with low electrical conductivity and which has flammable fluids inside it, as well as electrical and/or fluid-dynamic systems inside it.

The new generation of materials, and particularly composites with low electrical conductivity, has brought about the existence of structures in fuel tanks with different mechanical and electrical performances given the inherent properties of the materials used in their manufacture. While the tank is made from non-metallic materials with low electrical conductivity, the devices located inside are made from highly conductive materials, such as a fuel system made up of aluminum pipes and equipment with metal casing.

The drawbacks inherent to catastrophic failures resulting from an electrical discharge in an aircraft fuel tank caused on many occasions by a lightning strike were discussed above. When the structures used are manufactured with non-conducting materials there is a high risk that the current will circulate through the internal systems customarily manufactured with metallic materials. This situation may cause electric arcs, internal incandescent particles, hot spots or the malfunction of equipment considered to be critical, generating a potential ignition source that could give way to explosion and a subsequent structural collapse.

The present invention proposes a method for protecting the group of metal devices located inside a fuel tank, completely or partially manufactured with composites, against electrical discharges, by means of which:
a) an insulating member is included at the points where the metal devices are fixed/attached to the fuel tank to assure the electrical insulation of said metal devices with respect to the fuel tank;
b) insulating inserts are included in the linear metal devices such that they are subdivided into parts insulated from one another;
c) a connection with metal sub-structures with a very low resistance is provided in each one of the parts insulated from one another in the group of metal devices.

Other features and advantages of the present invention will be understood from the following detailed description of an illustrative embodiment of its object in relation to the attached figures.

### DESCRIPTION OF THE DRAWINGS

Figure 1 schematically shows the application of the method according to the invention to a fuel tank provided with several devices.
Figure 2 shows a pipe located inside a fuel tank protected according to the method of the present invention.
Figure 3 shows a support located in the wall of a fuel tank protected according to the method of the present invention.

### DETAILED DESCRIPTION OF THE INVENTION

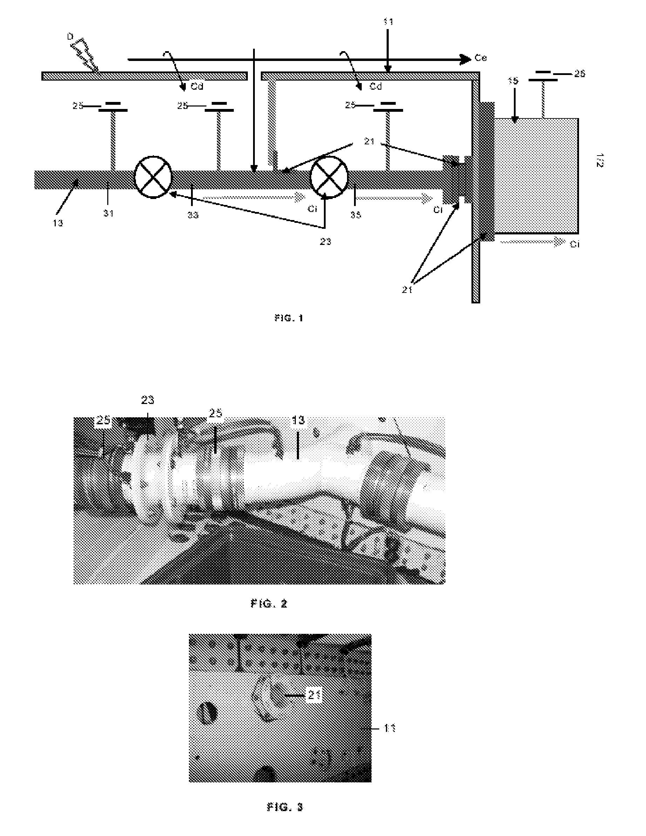

According to Figure 1, a fuel tank 11 manufactured with a material with low electrical conductivity, a device 13 consisting of a fuel pipe and a device 15 consisting of a piece of equipment with a metal casing, can be observed. The group of devices 13, 15 represents the metal installations located inside the tank 11 that are necessary for handing fuel.

According to the method object of the present invention, insulating members 21 are included, which can be made from a plastic material, at the points in which the devices 13 and 15 are fixed/attached to the tank 11 to insulate said devices 13 and 15 from the tank 11.

Figure 3 shows a specific example of an insulating member 21 at a fixing point of a tank 11.

For its part, several insulating inserts 23 of a non-conducting material, for instance plastic, are included in the pipe 13, defining parts 31, 33 and 35 therein insulated from one another.

Figure 2 shows an example of an insulating insert 23 in the pipe 13 located between two connections with a substructure 25 with a reference potential.

Finally, connections for parts 31, 33 and 35 of the pipe 13 and the device 15, which can be considered a part insulated from the remaining devices, with a sub-structure 25 with a reference potential ("0 volts"), are provided. The devices 13 and 15, which can be submerged in the fuel, can accumulate charge up to certain levels as a result of the generation of a static charge after the tank 11 receives an electrical discharge, but said connections prevent the occurrence of electric arcs and prevent the increase of said charge up to certain admissible energy levels (200 micro-Jules) by draining the static charge and prevent its accumulation in the system components.

The basis of the method object of the present invention is to prevent the current Ce circulating through the outer walls of the fuel tank 11 as a result of an electrical discharge caused, for example, by a lightning strike, from being shunted to the inner areas where the devices 13 and 15 are located.

Since the entire installation, made up of the devices 13 and 15 insulated from the main structure of the tank 11, is internal the only pathway for the external current Ce is the one that provides the points of connection to the sub-structure 25 with a reference potential (metallic).

The inductance and low section associated to said electrical points of connection and the presence of the insulating inserts 23 in the fuel pipe 13 make the external current Ce circulate towards the inside through shunts Cs at very low levels. Therefore the only current to which the metallic members of the system inside the tank are subjected is the one corresponding to the induction effect Ci.

On the other hand the insulating inserts 23 in the fuel pipes 13 or any other linear device prevent the possibility that the current Ci forms closed circuits where the circulation of high density current occurs repeatedly.

The insulating inserts 23 must maintain certain length dimensions to prevent electric arcs. In particular, the range of applicable distances that have been tested and applied in aircraft fuel tanks designed and manufactured by Airbus is comprised between 25-80 mm.

The insulating inserts 23 must be manufactured with an insulating material that is capable of providing electrical isolation exceeding 100 mega-Ohms for the purpose of withstanding the possible differences of potential that may occur due to a severe electrical discharge.

The determination of the points where the insulating inserts 23 must be located requires a detailed study of the resistances existing in the system as well as the study of the induced current levels on each area of the system in the most critical case of external electrical discharge. Nevertheless it is thought to be a general rule that an electrical resistance of less than 10 milli-Ohms must exist between any metallic section of the sub-structure 25 (reference potential) and each part 31, 33, 35 of the pipe 13 or any other linear device located inside the fuel tank 11 arranged between two insulating inserts 23.

It must be pointed out that most of the essence of the technique proposed in this application is based on these insulating inserts 23 given that they prevent that there are high electric currents circulating through the metallic parts belonging to the internal systems of the fuel tank. On certain occasions these insulating components must have a very novel design/material/geometry since they must be located in very small areas or in very short pipe sections.

The effectiveness of the solution applied for is supported by several tests performed by the applicant company in relation to the fuel system located in the horizontal stabilizer of different airplane models.

Modifications comprised within the scope defined by the following claims may be introduced in the preferred embodiment described above.

## Claims

1. A method of protecting a group of metal devices (13, 15) installed inside a fuel tank (11), manufactured either completely or partially with composites, against electrical discharges, **characterized in that**:
a) an insulating member (21) is included at the points where the metal devices (13, 15) are fixed/attached to the fuel tank (11) to assure the electrical insulation of said metal devices (13, 15) with respect to the fuel tank (11);
b) insulating inserts (23) are included in the linear metal devices (13) such that they are subdivided into parts (31, 33, 35) insulated from one another;
c) a connection with a metal sub-structure (25) with a very low resistance is provided in each one of the parts (31, 33, 35) insulated from one another in the group of metal devices (13, 15).

2. A method of protecting a group of metal devices (13, 15) arranged inside a fuel tank (11) according to claim 1, **characterized in that** the insulating inserts (23) provide an electrical resistance exceeding 100 mega-Ohms.

3. - A method of protecting a group of metal devices (13, 15) arranged inside a fuel tank (11) according to claim 2, **characterized in that** the division of the linear devices (13) into parts (31, 33, 35) is carried out such that there is an electrical resistance of less than 10 milli-Ohms between each one of them and the metal sub-structure (25).

4. - A method of protecting a group of metal devices (13, 15) arranged inside a fuel tank (11) according to any of the previous claims, **characterized in that** said fuel tank is located in an aircraft wing and/or stabilizer.
